# EUROPEAN PATENT SPECIFICATION

(11) **EP 2 865 637 B1**
(45) Date of publication and mention of the grant of the patent: **27.12.2017**
(21) Application number: 13005073.5
(22) Date of filing: 24.10.2013
(51) Int. Cl.: C01B 3/00

(54) **Nanocomposite based on graphene for reversible storage of hydrogen**
Nanokomposit auf Graphenbasis zur reversiblen Speicherung von Wasserstoff
Nanocomposite à base de graphène pour le stockage réversible de l'hydrogène

(43) Date of publication of application: 29.04.2015
(73) Proprietor: Seco/Warwick S.A., 66-200 Swiebodzin (PL); Politechnika Lódzka, 90-924 Lódz (PL)
(72) Inventor: Kula, Piotr, 91-496 Lódz (PL); Rzepkowski, Antoni, 94-128 Lódz (PL); Pietrasik, Robert, 95-060 Brzeziny (PL); Atraszkiewicz, Radomir, 92-503 Lódz (PL); Dybowski, Konrad, 28-337 Aleksandrow (PL); Kaczmarek, Lukasz, 91-323 Lódz (PL); Modrzyk, Wojciech, 65-012 Zielona Góra (PL)
(74) Representative: Passowicz, Marek

(56) References cited:
- US-A1- 2004 191 589
- US-A1- 2005 075 245
- US-A1- 2008 248 355
- US-A1- 2010 196 780

## Description

### Subject-matter of the invention

The present invention relates to a graphene-based nanocomposite for the reverse storage of hydrogen. More particularly, the present invention is directed to a nanocomposite based on monolayer sheets of polycrystalline or monocrystalline graphene.

### State of art

Being a clean source of energy, hydrogen is an attractive fuel of the future. Available methods of hydrogen storage, however, pose a set of problems. Four hydrogen storage techniques are currently known and used: in the liquid state; in the gaseous state, compressed under high pressure; using cryo-adsorption and in metal hydrides. The main shortcoming of the solutions listed above is the weight of hydrogen storage systems. The problem can be resolved by using hydrogen storage methods based on carbon materials. Conventional graphite-based carbon materials are not particularly attractive in terms of storage because a single hydrogen molecule is larger than the gaps in the aromatic carbon structures, chiefly benzene. A system based on such a solution would only be capable of storing ca. 1 wt. % of hydrogen. This is considerably below expectations, since satisfactory hydrogen storage capacity starts at 6.5 wt. %, as a minimum.

Such capacity can be achieved by storing hydrogen in nanostructures formed by carbon allotropes including nanotubes, fullerenes or graphene. Carbon-based storage systems make use of the process of hydrogen sorption taking place due to cyclical changes in temperature and/or pressure. In general terms, a reduction in temperature or an increase in partial pressure of hydrogen enhances hydrogen absorption. Conversely, hydrogen desorption can be induced by increasing temperature or reducing pressure.

Known are also multilevel parking lot GOF structures formed from oxidized graphene sheets stacked atop one another and bonded together with space maintained between consecutive layers. The structure, though capable of storing larger amounts of hydrogen, has a considerable size.

Known from the patent description no. US 2005/0075245 are carbon-based compositions designed for hydrogen storage, comprising spatially structured pillared carbon materials doped with metals in the pillars located between the layers. Metals can be selected from alkali metals, i.e. Li, Na, K, Be, Mg, Ca, and their combinations. The carbon material can be selected from graphite, more advantageously graphene, and other carbon nanostructures (nanofibres, nanotubes, etc.). The atomic proportion of the metal to the carbon atoms is in the range of about 1:3 to about 1:24 (most advantageously between 1:3 and 1:6). The optimum distance between the layers of the carbon material ranges from 6A to 12A. The hydrogen storage capacity of the configuration is at least 6.5 wt. % at 25°C and a pressure of about 10 bar. The method of making the hydrogen storage composition involves providing a solvated alkali metal containing organic ligands which, as a result of reaction with the carbon material, form a pillared material, whereby the above-mentioned alkali metal is solvated in an organic heterocyclic solvent (ether or 2,5-dihydrofuran).

Another method of hydrogen storage, also based on carbon materials, is the pyrolysis product of a molecular precursor - a cyclic quinone compound, as described in the patent application US 20100125038. The pyrolysis product may be combined with selected atoms of transition metals which may be dispersed on the surface of the material. The metallic nanoparticles may also react with another metal as alloys to further improve the hydrogen storage capacity. The diameter of the nanoparticles is in the 1 nm ÷ 100 nm range. The material for hydrogen storage based on a quinone compound contains at least two ketone groups, at least one metal alkoxide and - optionally - a halogen atom. The product of pyrolysis is capable of sorbing hydrogen at a level of 10 wt. % at the pressures of 1-80 bars and ambient temperatures.

The patent description no. US 2004/0247957 presents a simple storage method comprising a structure formed by multiple layers (sheets) of graphene oriented in a disordered fashion. Graphene sheets are obtained from an organic polymer material (polyacrylonitrile (PAN) or polyimide) subjected to heat treatment at a temperature within the 50÷1,000°C range, under inert gas conditions, followed by mechanical grinding. Aside from PAN and polyimide, other polymers can also be used, including rayon, polyvinyl alcohol, polyamide, phenol, polyvinyl chloride, polyvinylidene chloride, polybutadiene, etc.

Also known is a hydrogen storage system based on the carbon nanotubes structure, as described in the patent application no. US 2004/0191589. The method involves the use of single-walled carbon nanotubes (SWNT) and multi-walled (carbon nanotubes (MWNT) with open walls, so that it is possible to utilize the internal surface as well. Selective opening of lateral walls is achieved in the process of oxidation performed in nitric acid, sulphuric acid, hydrochloric acid, a hydrogen peroxide solution or an oxidizing gas based on oxygen, ozone, chlorine, chlorine dioxide, bromine, iodine, nitrogen oxide and sulphur oxide. The structure is based on a bundle of open carbon nanotubes which allows hydrogen absorption in the spaces between the nanotubes and in the internal surfaces of the tubes. Despite demonstrating that the theoretical hydrogen storage capacity of the nanotubes can reach up to 10 wt. %, the maximum capacity obtained in the examples presented in the patent description was 1.12 wt. %. Another nanotube-based hydrogen storage solution is described in the patent application no. US 2011/0008239. The claims of the patent refer to a method of storing hydrogen with an aid of nanotubes having a specified diameter selectable from the 0.5 nm - 0.8 nm range. The claims regarding nanotube diameters are related to the fact that the inventors have determined that the diameter of the nanotubes has an important effect on hydrogen absorption and storage properties.

Yet another method of carbon-based hydrogen storage is described in the patent description no. US 6,294,142. The method of hydrogen storage utilizes the absorption properties of the product of reaction of an alkali metal and graphite. The alkali metal is selected from the group of lithium, sodium or potassium. According to the method, a mixture is prepared containing six to 24 atoms of carbon (graphite) per one atom of the selected alkali metal. The mixture is heat-treated under inert gas atmosphere, producing completely intercalated alkali metal atoms between graphite planes. A graphite-metal composite is thus formed. The hydrogen storage capacity of the composite can reach up to one third of its original weight. The process is reversible. Similarly to other storage solutions, hydrogen absorption or desorption can be induced by temperature and/or pressure changes.

From US2008/0248355 a hydrogen storage material in the form of a spiral roll is know.

### Nature of the invention

The essence of the nanocomposite according to the proposed invention is that the material, produced from graphene sheets, has the shape of a cylindrical spiral roll of polycrystalline or monocrystalline graphene with a pitch, advantageously constant, in the range from 0.2 to 2 nm, whereby the spiral roll of polycrystalline graphene has a grain size not smaller than 50 nm. The roll of polycrystalline or monocrystalline graphene is wound on a core with a diameter from 1 nm to 20 µm. The roll of polycrystalline or monocrystalline graphene is wound consecutively from a single sheet or multiple sheets (from 2 to 50,000). The external diameter of the roll is within the range from 500 nm to 5 mm. The width of the roll is within the range from 0.05 to 1,000 mm. Metal and/or nonmetal carbide particles, advantageously carbides of Ca, Al, Li, B and Si, occupy spaces existing between consecutive layers within the roll.

It is furthermore advantageous for metal and/or nonmetal carbide particles to contain between 1 and 5 molecules. Metal and/or nonmetal carbide particles cover between 0.1% and 5% of the internal surface of the spiral roll.

The nanocomposite according to the present invention is characterized by very good hydrogen sorption and desorption. Additionally, the cost of producing the material is relatively low thanks to the possibility of using relatively simple technologies.

### Detailed description of the invention

The proposed invention will be outlined in detail on the basis of the examples of embodiment shown in a drawing representing a partially unwound roll of the nanocomposite in a perspective view.

The spiral layers of the roll are wound on a core and have a shape approximating the Archimedean spiral. The internal surface of the roll is coated with functionalizing particles.

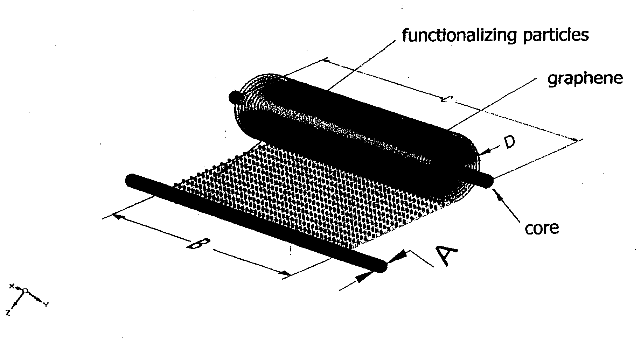

The indicators shown in the drawing denote the following parameters:
A - diameter of the core and external fibre,
B - width of the graphene sheet,
C - length of the core and external fibre, and
D - pitch of the spiral.

### Example 1

A multilayered sheet measuring 100 x 600 mm, containing on the external surface a single layer of polycrystalline graphene with a grain size ranging between 100 to 120 nm, formed on a bimetallic substrate of copper and platinum, was placed in the vacuum chamber of a plasma-chemical reactor equipped with pulsed laser and a target made of aluminium carbide Al₄C₃. After reducing the pressure in the reactor chamber to the level of 10⁻⁶ Pa, three nanosecond laser pulses were focused onto the target surface, causing Al₄C₃ ablation and applying particles separated from the target to the graphene-side exposed surface of the plate. After removing the plate from the reactor chamber a polymethyl methacrylate film was attached to the plate surface and copper was selectively etched from the space between platinum and PMTM, obtaining a graphene sheet functionalized with Al₄C₃ particles, on a PMTM carrier, measuring 100 x 600 mm. Carbon cores, 140 mm long and with a diameter of 5 µm, were then attached by thermal welding to the two short sides of the graphene sheet. The PMTM carrier was subsequently dissolved in acetone and dried. Functionalized graphene was then rolled into a spiral roll, at which point the external fibre was separated by cutting, and the core section extending beyond the roll was severed. The roll thus prepared was heated under a vacuum of 10⁻⁶ Pa at a temperature of 600°C for 15 minutes. Ultimately, a roll was obtained with the following parameters: external dimensions - diameter: 30 µm, length: 100 mm, weight - 66 µg, density - 0.76 g/cm³. By comparing the external diameter of the roll and the diameter of the core, the pitch of the spiral line of functionalized graphene was determined to be 0.59 nm. Analyzing the density of the roll and taking into account the weight of the carbon fibre and the weight of the graphene layer, it was estimated that Al₄C₃ particles had functionalized ca. 2.04% of the internal surface of the roll.

The roll of functionalized polycrystalline graphene thus produced was then subjected to hydrogen (99.996% pure) at a pressure of 5 MPa. Subsequently, an assessment was performed of the quantity of hydrogen absorbed by a roll weighing 66 µg, by conducting measurements of IR energy absorption after complete combustion in a stream of inert gas. The weight of the test sample was complemented by a "blind sample" of spectrally pure silicon. The blind sample weighed ca. 250 mg. The analysis of hydrogen content produced the result of 16 ppm, which - with respect to the weight of the analyzed sample - is equivalent to ca. 7 wt. % of hydrogen.

### Example 2

Five multilayered sheets measuring 100 x 600 mm, containing on the external surface a single layer of polycrystalline graphene with a grain size ranging from 100 to 120 nm, formed on a bimetallic substrate of copper and platinum, were placed successively in the vacuum chamber of a plasma-chemical reactor equipped with a two-electrode target composed of amorphous silicon carbide (SiC) and a spark-ignited target spraying system based on the discharges of a 4 µF capacitor. After reducing the pressure in the reactor chamber to the level of 10⁻⁶ Pa and filling it with argon to the pressure of 10 hPa, five cycles of capacitor charging and spark-activated discharging were performed, achieving SiC ablation and applying particles separated from the target to the graphene-side exposed surface of the plate. After removing the plate from the reactor chamber a polymethyl methacrylate film was attached to the plate surface and copper was selectively etched from the space between platinum and PMTM, obtaining a graphene sheet functionalized with SiC particles, on a PMTM carrier, measuring 100 x 600 mm. Carbon cores, 140 mm long and with a diameter of 8 µm, were then attached by thermal welding to the two short sides of each graphene sheet. The PMTM carrier was then dissolved in acetone and the sheet was dried. The first functionalized graphene sheet was then rolled into a spiral roll, at which point the external fibre was separated by cutting. Subsequent sheets were first thermally attached to the roll, whereupon the initial fibre was cut off and roll winding was continued. After the fifth sheet was wound up the last external fibre was detached and the core section extending beyond the roll was cut off. The roll thus prepared was heated under a vacuum of 10⁻⁶ Pa at a temperature of 680°C for 15 minutes. Ultimately, a roll was obtained with the following parameters: external dimensions - diameter: 65 µm, length: 100 mm, weight - 340 µg, density - 1.02 g/cm³. By comparing the external diameter of the roll and the diameter of the core, the pitch of the spiral line of functionalized graphene was determined to be 0.68 nm. Analyzing the density of the roll and taking into account the weight of the carbon fibre and the weight of the graphene layer, it was estimated that SiC particles had functionalized ca. 4% of the internal surface of the roll.

The roll of functionalized polycrystalline graphene thus produced was then subjected to hydrogen (99.996% pure) at a pressure of 5 MPa. Subsequently, an assessment was performed of the quantity of hydrogen absorbed by a roll weighing 340 µg, by conducting measurements of IR energy absorption after complete combustion in a stream of inert gas. The weight of the test sample was complemented by a "blind sample" of spectrally pure silicon. The blind sample weighed ca. 250 mg. The analysis of hydrogen content produced the result of 16 ppm, which - with respect to the weight of the analyzed sample - is equivalent to ca. 6.5 wt. % of hydrogen.

## Claims

1. A nanocomposite for the reverse storage of hydrogen in the form of a cylindrical spiral roll which is made from at least a single monolayer : sheet of polycrystalline or monocrystalline functionalized graphene with a preferably constant pitch i.e. separating spacing, **wherein:**
- the cylindrical spiral roll is wound up onto a carbon core with a diameter in the range of 1 nm to 20 µm;
- the cylindrical spiral roll is composed of at most 50 000 polycrystalline or monocrystalline functianalized graphene sheets;
- the separating spacing of the cylindrical spiral roll is in the range of 0.2 to 2 nm;
- the external diameter of the cylindrical spiral roll is in the range of 500 nm to 5 mm;
- the width of the cylindrical spiral roll is in the range of 0.05 to 1000 mm;
- the cylindrical spiral roll of functionalized graphene has grains with a minimum diameter of 50 nm;
- the space between subsequent sheets contains particles of metal carbides and/or non-metal carbides which cover from 0.1% to 5% of the inner surface of the cylindrical spiral roll.

2. The nanocomposite according to claim 1, **characterized in that** the space between subsequent sheets in the roll contains preferably carbides of Ca, Al, Li, B and Si.

3. The nanocomposite according to claims 1 or 2, **characterized in that** the particles of metal and/or non-metal carbides contain from 1 to 5 molecules.

4. The nanocomposite according to claim 1, **wherein:**
- the cylindrical spiral roll, 100 mm wide and with the diameter of 30 µm, is made from the single monolayer sheet of polycrystalline graphene which is wound up onto a carbon core with the diameter of 5 µm;
- the monolayer sheet of polycrystalline graphene has grains with size ranging from 100 to 120 nm;
- the monolayer sheet of polycrystalline graphene measuring 100x600 mm is functionalized with Al₄C₃ particles which cover 2.04% of the inner surface of the cylindrical spiral roll
- the width of the separating spacing of the cylindrical spiral roll is 0.59 nm:
- a hydrogen content in the cylindrical spiral roll is 16 ppm, which - with respect to the weight of the analyzed sample - is equivalent to ca. 7.0 wt. % of hydrogen.

5. The nanocomposite according to claim 1, **wherein:**
- the cylindrical spiral roll, 100 mm wide and with the diameter of 65 µm, is made from five monolayer sheets of polycrystalline graphene joined by thermal welding and wound up onto a carbon core with the diameter of 8 µm;
- the monolayer sheets of polycrystalline graphene have grains with size ranging from 100 to 120 nm;
- the monolayer sheets of polycrystalline graphene measuring 100x 600 mm are functionalized with SiC particles which cover 4% of the inner surface of the cylindrical spiral roll;
- the width of the separating spacing of the cylindrical spiral roll is 0.68 nm;
- a hydrogen content in the cylindrical spiral roll is 16 ppm, which - with respect to the weight of the analyzed sample - is equivalent to ca. 6.5 wt. % of hydrogen.

## Patentansprüche

1. Nanokomposit zur reversen Speicherung von Wasserstoff, in Form einer zylindrischen Spiralrolle, hergestellt aus mindestens einer einzelnen einlagigen Schicht polykristallines oder monokristallines funktionalisiertes Graphen mit vorzugsweise konstanter Steigung, d.h. Trennabstand, **worin:**
- die zylindrische Spiralrolle auf einen Kohlenstoffkern mit einem Durchmesser von 1 nm bis 20 µm aufgewickelt ist;
- die zylindrische Spiralrolle aus höchstens 50 000 polykristallinen oder monokristallinen Schichten funktionalisiertes Graphen besteht;
- der Trennabstand der zylindrischen Spiralrolle in einem Bereich von 0,2 bis 2 nm liegt;
- der Außendurchmesser der zylindrischen Spiralrolle in einem Bereich von 500 nm bis 5 mm liegt;
- die Breite der zylindrischen Spiralrolle in einem Bereich von 0,05 bis 1000 mm liegt;
- die zylindrische Spiralrolle aus funktionalisiertem Graphen Körner mit einem minimalen Durchmesser von 50 nm hat;
- der Raum zwischen den aufeinander folgenden Wicklungen Metall- und/oder Nichtmetallcarbidteilchen enthält, die von 0,1% bis 5% der inneren Oberfläche der zylindrischen Spiralrolle bedecken.

2. Nanokomposit nach Anspruch 1, **dadurch gekennzeichnet, dass** der Raum zwischen den aufeinander folgenden Schichten in der Rolle vorzugsweise Ca-, Al-, Li-, B- und Si-Carbide enthält.

3. Nanokomposit nach Anspruch 1 oder 2, **dadurch gekennzeichnet, dass** die Metall- und/oder Nichtmetallcarbidteilchen von 1 bis 5 Moleküle enthalten.

4. Nanokomposit nach Anspruch 1, **worin:**
- die zylindrische Spiralrolle mit einer Breite von 100 mm und einem Durchmesser von 30 µm aus einer einzelnen einlagigen Schicht polykristallines Graphen hergestellt ist, die auf einen Kohlenstoffkern mit einem Durchmesser von 5 µm aufgewickelt ist;
- die einlagige Schicht polykristallines Graphen Körner mit einer Größe von 100 bis 120 nm hat;
- die einlagige Schicht polykristallines Graphen mit Abmessungen von 100 x 600 mm mit Al₄C₃-Teilchen funktionalisiert ist, die 2,04% der inneren Oberfläche der zylindrischen Spiralrolle einnehmen;
- die Breite des Trennabstands der zylindrischen Spiralrolle 0,59 nm beträgt;
- der Wasserstoffgehalt in der zylindrischen Spiralrolle 16 ppm beträgt, was - in Bezug auf die Masse des untersuchten Probekörpers - ca. 7,0 Gew.% Wasserstoff entspricht.

5. Nanokomposit nach Anspruch 1, **worin:**
- die zylindrische Spiralrolle mit einer Breite von 100 mm und einem Durchmesser von 65 µm aus fünf durch thermische Schweißung miteinander verbundenen einlagigen Schichten polykristallines Graphen hergestellt ist, aufgewickelt auf einen Kohlenstoftkern mit einem Durchmesser von 8 µm;
- die einlagigen Schichten polykristallines Graphen Körner mit einer Größe von 100 bis 120 nm haben;
- die einlagigen Schichten polykristallines Graphen mit Abmessungen von 100 x 600 mm mit SiC-Teilchen funktionalisiert sind, die 4% der inneren Oberfläche der zylindrischen Spiralrolle einnehmen;
- die Breite des Trennabstands der zylindrischen Spiralrolle 0,68 nm beträgt;
- der Wasserstoffgehalt in der zylindrischen Spiralrolle 16 ppm beträgt, was - in Bezug auf die Masse des untersuchten Probekörpers - ca. 6,5 Gew.% Wasserstoff entspricht.

## Revendications

1. Le nanocomposite pour le stockage inverse de l'hydrogène sous la forme d'un rouleau cylindrique en spirale qui est constitué d'au moins une seule feuille monocouche de graphène polycristallin ou monocristallin fonctionnalisé avec un pas de préférence constant, c'est-à-dire un espacement de séparation, **où :**
- le rouleau en spirale cylindrique est enroulé sur un noyau de carbone d'un diamètre compris entre 1 nm et 20 µm;
- le rouleau cylindrique en spirale est composé d'au plus de 50 000 feuilles de graphène polycristallin ou monocristalline fonctionnalisées;
- l'espacement de séparation du rouleau en spirale cylindrique est compris entre 0,2 et 2 nm;
- le diamètre externe du rouleau en spirale cylindrique est compris entre 500 nm et 5 mm;
- la largeur du rouleau en spirale cylindrique est comprise entre 0,05 et 1000 mm;
- le rouleau en spirale cylindrique du graphène fonctionnalisé a des grains avec un minimum de 50 nm de diamètre;
- l'espace entre les cylindres subséquents contient des particules de carbures de métaux et / ou de carbures non métalliques qui couvrent de 0,1% à 5% de la surface interne cylindrique du rouleau en spirale.

2. Le nanocomposite selon la revendication 1, **caractérisé en ce que** l'espace entre les feuilles dans le rouleau contient de préférence des carbures de Ca, Al, Li, B et Si.

3. Le nanocomposite selon la revendication 1 ou 2, **caractérisé en ce que** les particules de carbures métaux et / ou non métalliques contiennent de 1 à 5 molécules.

4. Le nanocomposite selon la revendication 1, **où :**
- le rouleau cylindrique en spirale, de 100 mm de largeur et de 30 µm de diamètre, est constitué d'une seule couche monocouche de graphène polycristallin qui est enroulée sur un noyau de carbone de 5 µm de diamètre;
- la feuille monocouche polycristallin de graphène a des grains de taille comprise entre 100 et 120 nm;
- la feuille monocouche de graphène polycristallin d'une taille de 100 mm x 600 mm est fonctionnalisée avec des particules d'Al₄C₃ qui couvrent 2,04% de la surface interne du rouleau cylindrique en spirale ;
- l'espacement du rouleau cylindrique en spiral est de 0,59 nm;
- une teneur en hydrogène dans le rouleau cylindrique en spirale est de 16 ppm, ce qui - par rapport au poids de l'échantillon analysé - est équivalent à environ 7,0% du poids d'hydrogène.

5. Le nanocomposite selon la revendication 1, **où :**
- le rouleau cylindrique en spirale, de 100 mm de largeur et de 65 µm de diamètre, est constitué de cinq feuillets monocouches de graphène polycristallin réunis par soudure thermique et d'un noyau de 8 µm de diamètre;
- les feuilles monocouches de graphène polycristallin ont des grains de taille comprise entre 100 et 120 nm;
- les feuilles monocouches de graphène polycristallin mesurant 100 x 600 mm sont fonctionaliées avec des particules de SiC qui couvrent 4% de la surface interne du rouleau cylindrique en spirale;
- la largeur de l'espacement du rouleau cylindrique en spiral est de 0,68 nm;
- une teneur en hydrogène dans le rouleau cylindrique en spirale est de 16 ppm, ce qui - par rapport au poids de l'échantillon analysé - est équivalent à environ 6,5% du poids d'hydrogène.
